(19) Europäisches Patentamt
European Patent Office
Office européen des brevets

(11) **EP 4 660 280 A1**

(12) **EUROPEAN PATENT APPLICATION**

(43) Date of publication:
**10.12.2025 Bulletin 2025/50**

(21) Application number: **24180920.1**

(22) Date of filing: **07.06.2024**

(51) International Patent Classification (IPC):
**C10B 53/02** (2006.01)    **C10L 5/44** (2006.01)
**C10L 9/08** (2006.01)    **C10L 5/36** (2006.01)

(52) Cooperative Patent Classification (CPC):
**C10B 53/02; C10L 5/44; C10L 9/083; C10L 5/363**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Perpetual Next Technologies B.V.
1033 SE Amsterdam (NL)**

(72) Inventors:
• **DEKKER, Martijn
  1033 SE Amsterdam (NL)**
• **GRAHAM, Shalini
  1033 SE Amsterdam (NL)**

(74) Representative: **Hoyng Rokh Monegier B.V.
Rembrandt Tower, 30th Floor
Amstelplein 1
1096 HA Amsterdam (NL)**

(54) **METHOD AND APPARATUS FOR THE PREPARATION OF BIOCOAL FROM BIOMASS FOR GASIFICATION**

(57) The invention relates to a processing method for processing biomass comprises:
- preparing biocoal from biomass; and
- grinding the biocoal; wherein a normalized bulk density of the biocoal after grinding is above 0.75 metric tons per cubic meter, the normalized bulk density being calculated according to

$$normalized\ bulk\ density = \frac{tapped\ bulk\ density}{dry\ mass\ yield}$$

wherein the tapped bulk density is the density of the biocoal after grinding in metric tons per cubic meter, and the dry mass yield indicates a ratio of the biocoal mass before grinding to the initial mass of dried biomass from which dried biomass the biocoal is prepared.

EP 4 660 280 A1

Fig.1

**Description**

FIELD OF THE INVENTION

The invention generally refers to a method and an apparatus for gasification of biocoal from biomass, more particularly to a method and an apparatus for the preparation of the biocoal from biomass for gasification.

BACKGROUND OF THE INVENTION:

Biomass gasification is a thermochemical process that converts organic materials, known as biomass, into combustible gases, primarily carbon monoxide, hydrogen, and methane, through a series of reactions involving heat, steam, and limited oxygen. This process transforms solid biomass, such as wood chips, agricultural residues, or municipal solid waste, into a more versatile and easily utilized gaseous form, often referred to as syngas or synthesis gas. However, many conventional methods suffer from the quantities of tar generated during gasification, which tars tend to condense within the gasification system.

Coal gasification is a widely recognized and established technology for converting solid coal into syngas, a versatile fuel that finds applications in various industrial processes. Traditionally, coal gasification processes have primarily utilized conventional coal feedstocks, presenting challenges related to the environmental impact of coal-derived syngas, as well as concerns about the sustainability of coal as an energy source.

In coal gasification, a distinction is typically made between dry feed having solids fed pneumatically, and slurry feed systems feeding a coal-water slurry. While pumping such coal-water slurry is usually technically simpler to put into practice, such systems require the contained water to be vaporized. The energy required for vaporization constitutes a significant portion of the energy required to provide the syngas. The amount of water in the coal-water slurry determines a minimum weight percentage of the solids to be economically viable.

In an example of a coal-water slurry gasification, the slurry is pumped into a gasifier where it reacts with oxygen at around 1400 °C at pressures between 2 and 10 MPa, preferably around 5 MPa to form synthetic gas (syngas) mostly containing hydrogen and carbon monoxide.

In response to the increasing emphasis on sustainability and the need to reduce greenhouse gas emissions, there has been a growing interest in the utilization of alternative feedstocks for gasification. Some technologies for a gasification of biomass have been proposed, but usually suffer from low efficiency and high maintenance effort due to the high tar content in the gas.

Biocoal, a renewable and environmentally friendly solid fuel derived from biomass through pyrolysis, has emerged as a promising candidate for such applications. Despite the potential advantages of biocoal, there remain challenges in efficiently preparing and utilizing it in coal gasification processes. Conventional methods for handling and preparing coal may not be directly applicable to biocoal due to its unique properties, such as different moisture content, particle size, particle shape and reactivity. The present invention addresses these challenges by providing a novel method and apparatus for preparing biocoal tailored specifically for optimal performance in coal gasification.

Historically, coal gasification technologies have been developed with a focus on dry coal feedstocks. Conventional approaches to biomass gasification may not be directly translatable to biocoal due to variations in feedstock characteristics and processing requirements.

Some prior art may discuss methods for biomass pyrolysis to produce biocoal, but there is a distinct lack of attention to the subsequent steps involved in preparing the biocoal for efficient gasification. The current state of the art does not adequately address the need for a dedicated and optimized method to prepare biocoal feedstocks specifically for coal gasification processes.

An objective of the present invention is to provide a method and apparatus for the efficient preparation of biocoal feedstocks for coal gasification. The invention aims to overcome the limitations associated with existing technologies by introducing a systematic and optimized approach to handle biocoal, ensuring its effective utilization in coal gasification processes. Through this innovation, the invention contributes to the advancement of cleaner and more sustainable energy production practices, aligning with the global shift towards greener and renewable energy sources.

SUMMARY

While the invention is defined in the independent claims, further aspects of the invention are set forth in the dependent claims, the figures, and the following description.

BRIEF DESCRIPTION OF THE FIGURES

Fig. 1 is a schematic illustration showing a processing apparatus according to an embodiment of the invention;
Fig. 2 shows embodiments of a grinding unit; and
Fig. 3 shows embodiments of a gasification unit.

DESCRIPTION OF THE PREFERRED EMBODIMENTS

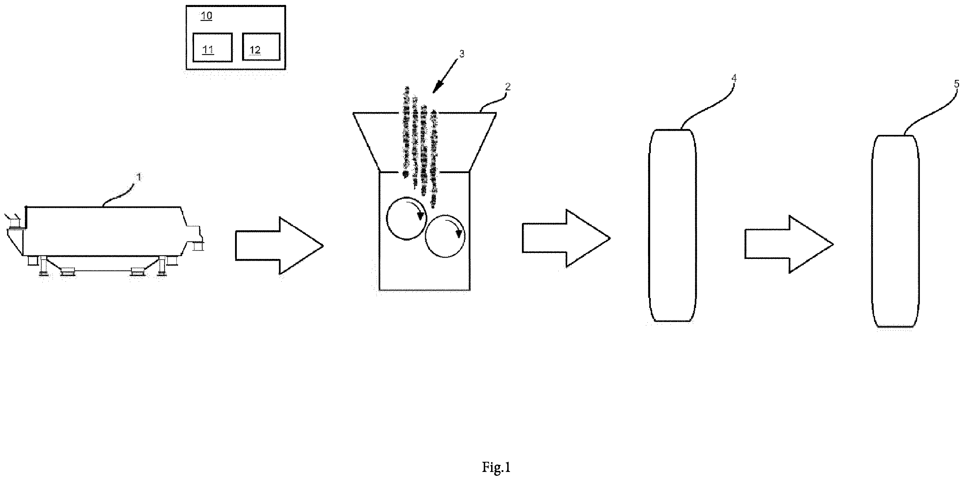

Fig. 1 shows a handling apparatus for biocoal processing comprising a torrefaction unit 1 and a grinding unit 2. Before explaining the handling apparatus in detail, some general aspects of the invention will be discussed.

When feeding a coal-water slurry in a coal gasification system, the coal-water slurry, a suspension of biocoal in water, should desirably be easy to convey and should contain as much biocoal and as little water as possible. By reducing the water in the biocoal suspension, the amount of water to be evaporated is likewise reduced, energy density of the biocoal suspension and energy efficiency of the gasification is improved. However, previous attempts to mix a biocoal suspension with more than about 30% by weight of biocoal failed. That is portions of the biocoal formed dry clusters of biocoal in the water. This is undesirable as the dry clusters of biocoal in the suspension hinder feeding the biocoal suspension into the gasification unit and impair the effectiveness of water as a conveying fluid in feeding the biocoal suspension.

According to an aspect, a processing method for processing biomass is provided, the method comprising:

- preparing biocoal from biomass; and
- grinding the biocoal;

wherein a normalized bulk density of the biocoal after grinding is above 0.75 metric tons per cubic meter, the normalized bulk density being calculated according to

$$normalized\ bulk\ density = \frac{tapped\ bulk\ density}{dry\ mass\ yield}$$

wherein the tapped bulk density is the density of the biocoal after grinding in metric tons per cubic meter, and the dry mass yield indicates a ratio of the biocoal mass before grinding to the initial mass of dried biomass from which dried biomass the biocoal is prepared.

The biocoal is usually composed of particles with diverse roundness and sphericity. It has been found that by grinding roundness and sphericity increase, that is roughly speaking edges become less sharp (increased roundness) and dimensions of the biocoal particles in different orientations become more similar (increased sphericity). The increase in roundness and sphericity with a normalized bulk density as claimed not only allow mixing a biocoal suspension in water with more than about 50% of biocoal by weight and thus with an increased energy density of the biocoal suspension, it was also surprisingly found that with an increase in sphericity viscosity was reduced such that the biocoal suspension feeds more easily into the gasification unit. It is understood that uniform spherical particles can rotate more freely around their own axis, while platy or rod-like particles require an area equal to the length of their longest axis for rotating. Interactions resulting from contacts between rotating particles result in less movement of the particles with respect to each other and thus require less energy, such that the viscosity is reduced. The tapped bulk density refers to the random dense packing of the biocoal indicated as weight per volume of tapped biocoal.

Within the present context, dried biomass is biomass having no entrained water, e.g. after drying to remove its moisture content. However, dried biomass can still contain chemically bound water, that is water molecules that are incorporated into the molecular structure of the biomass material. The biocoal mass is determined particularly after preparing the biocoal from the biomass. The biocoal is typically prepared from the biomass by pyrolysis, for example by torrefaction. Normalizing the biocoal mass with the mass of the dried biomass cancels out an intensity of the pyrolysis, particularly torrefaction. This is advantageous for the determination of the degree of the grinding as torrefaction usually makes particles shrink and brittle to different degrees, depending on the intensity of torrefaction. The biocoal after preparation from the dried biomass corresponds to the biocoal before grinding.

Also in pneumatic conveying, that is where the biocoal is conveyed by air or another gas and dry fed into a gasification unit, the increased roundness and sphericity prevent bridging such that biocoal particles do not cling together and convey more easily. The increased roundness and sphericity also allow for higher densities and reduce the amount of conveying gas and increase the energy density of the mixture of biocoal with gas.

In various embodiments the method further comprises mixing the ground biocoal with a conveying fluid and forwarding the ground biocoal and the conveying fluid to a gasification unit.

In various embodiments the conveying fluid is water.

In various embodiments the conveying fluid is an inert gas.

In various embodiments the density of the mixture of solids and inert gas at a pressure between 2 and 10 MPa, preferably 5 MPa, is at minimum 380 kg/m3.

In various embodiments the biocoal is ground and mixed with water such that the ground biocoal and the water have a mass ratio of biocoal to water above 50%.

In various embodiments the method further comprises generating a synthesis gas from the ground biocoal.

In various embodiments the biocoal has a molar ratio of oxygen to carbon below 0.4 and/or a moisture content of 2% or less by weight. The molar ratio of oxygen to carbon below 0.4 improves heat distribution and provides a syngas rich in CO and H2.

In various embodiments the biocoal has a molar ratio of oxygen to carbon below 0.4 and an energy density above 22 MJ/kg, as lower heating value, LHV. This further increases CO and H2 in the syngas. The lower heating value is usually understood as the available thermal energy produced by a complete combustion of the biocoal with the thermal energy of vaporization of the water subtracted from the available energy.

In various embodiments preparing biocoal from biomass comprises torrefying the biomass. In various embodiments, torrefying biomass includes oxidizing at least a portion of the synthesis gas generated in the pyrolysis of the biomass to power the torrefaction of the biomass. This allows combusting essentially all condensable substances, such as tar, phenols, and/or higher hydrocarbons. Torrefaction reduces the molar ratio of oxygen to carbon and the molar ratio of hydrogen to carbon, and increases relative content of fixed carbon, energy density and calorific value usually measured in MJ per kg.

In various embodiments the method further comprises determining the normalized bulk density including tapping a predetermined mass of biocoal, determining a volume of the predetermined mass of biocoal, and determining ratio of the biocoal mass to the ratio of the biocoal mass to the initial mass of biomass. In various embodiments the normalized bulk density is determined continuously. In various embodiments grinding of the biocoal is adjusted according to maintain the normalized bulk density of the biocoal after grinding above 0.75 metric ton per cubic meter.

In this regard, determining the normalized bulk density may or may not include the multiplication by 10. Also while indicated in 'metric ton per cubic meter', different units of mass and/or volume can be used for the normalized bulk density and/or the tapped bulk density without departing from the principle of the invention. The normalized bulk density of the biocoal after grinding above 0.75 metric ton per cubic meter can be adapted accordingly.

According to another aspect a device for processing biocoal is provided, the device comprising:

- a pyrolysis device configured to process biomass to create biocoal; and
- a coal mill configured to grind the biocoal;

wherein the coal mill is configured to grind the biocoal such that a normalized bulk density of the biocoal after grinding is above 0.75 metric tons per cubic meter, the normalized bulk density being calculated according to

$$normalized\ bulk\ density = \frac{tapped\ bulk\ density}{dry\ mass\ yield}$$

wherein the tapped bulk density is the density of the biocoal after grinding in metric tons per cubic meter, and the dry mass yield indicates a ratio of the biocoal mass before grinding to the initial mass of dried biomass from which dried biomass the biocoal is prepared.

In various embodiments the pyrolysis device is a torrefaction device.

In various embodiments the device further comprises a gasification unit configured to receive the ground biocoal and generate a synthesis gas from the ground biocoal.

In various embodiments the device further comprises a mixing device configured to mix the ground biocoal with water, wherein the coal mill is configured to grind the biocoal such that the biocoal and the water exiting the mixing device have a mass ratio of biocoal to water above 50%.

According to another aspect a control member includes a microprocessor and a memory, the memory comprising instructions which, when executed by the microprocessor, cause the microprocessor to execute the method according to any one of the embodiments above.

In this respect, the tapped bulk density refers to its random dense packing of the biocoal powder indicated as weight per volume of tapped biocoal powder. Tapping of carbonaceous material is particularly defined in standard ISO 10236:1995, but further standards exist for tapped density. In practice, to receive an approximation of the tapped bulk density of the biocoal powder, a container with a known volume is filled up with the biocoal powder and tapped on a flat even surface. The tapping compacts the biocoal powder by removing trapped air and the created space in the container is filled with biocoal powder again. The container is again tapped and the created space is again filled with biocoal powder. This process is repeated until the space created by the tapping is insignificant for the measurement of the density. For example, until the space created by the tapping is below 5%, 3% or 1% of the volume of the container. Usually the biocoal powder of a given mass when loosely filled into the container before tapping and other compacting has a volume of 1.2 to 1.4 times the volume of the tapped biocoal powder. The content of the volume is weighed, and the density is determined from the ratio of biocoal powder weight to volume.

The biocoal is made up of coal particles with diverse roundness and sphericity. In this context, the roundness is understood as the degree of smoothing of coal particles. A coal particle with a low roundness has sharp corners, a coal particle with a high roundness has rounded corners, that is, mostly corners with a radius of curvature less than a $5^{th}$ of the longest elongation of the coal particle. Sphericity of an object is usually understood as the ratio of the surface area of a sphere with the same volume to the object's surface area.

The inventors have realized that for an efficient coal gasification of the biocoal, the biocoal should constitute a reasonably high share of a coal-water slurry. This reduces the amount of water that needs to be vaporized when the coal-water slurry enters the gasification unit. The inventors have further realized that coal particles with high roundness and sphericity are better suited to increase a coal particle share of the coal-water slurry.

Coming back to Fig. 1, the torrefaction unit 1 is configured to receive biomass and to process the biomass to biocoal 3. An example of a torrefaction unit is described in WO 2021/018794A1. In various embodiments the biocoal 3 is cooled and stored.

The handling apparatus is configured to pass the biocoal 3 to the grinding unit 2. The grinding unit 2 is configured to receive the biocoal 3 from the torrefaction unit 1 and to grind the biocoal 3 to alter coal particle shape. As explained further below, the grinding unit 2 is configured to alter coal particle shape through attrition and/or compression forces. Grinding increases roundness and sphericity of the coal particles of the biocoal 3.

In various embodiments, the handling apparatus comprises a storing unit configured to store the biocoal 3 prior to or after grinding. In various embodiments the handling apparatus comprises a cooling unit configured to cool the biocoal 3 prior to grinding and/or storing.

In various embodiments the handling apparatus comprises a fluidization unit 4 configured to engage the ground biocoal 3 with a conveying fluid to thus create a biocoal suspension. In various embodiments the conveying fluid is a gas or a liquid. In various embodiments the conveying fluid is water. In various embodiments the conveying fluid is air.

In various embodiments the fluidization unit 4 comprises a mechanical agitator accommodated in a mixing tank. The fluidization unit 4 is configured to pass the ground biocoal 3 and water into the mixing tank. The mechanical agitator is configured to create turbulences in the water and thus mixing the ground biocoal 3 with the water.

In various embodiments the fluidization unit 4 comprises a water pump and a nozzle accommodated in a mixing tank and configured to generate a water jet. The fluidization unit 4 is configured to pass the ground biocoal 3 into the mixing tank. The pump and the nozzle are configured to direct a water jet at the ground biocoal 3 and thus to mix the ground biocoal 3 with the water in the mixing tank. In various embodiments the fluidization unit 4 is configured to inject the ground biocoal 3 into the water jet in the mixing tank.

In various embodiments the fluidization unit 4 comprises an ultrasonic generator accommodated in a mixing tank. The fluidization unit 4 is configured to pass the ground biocoal 3 and water into the mixing tank such that the ground biocoal 3 floats in the water. The ultrasonic generator is configured to propagate ultrasonic waves in the water creating micro-cavitation. When the cavitation bubbles collapse, local shock waves from the collapse help breaking down agglomerates of ground biocoal 3 and distribute the biocoal particles evenly in the water.

In various embodiments the fluidization unit 4 comprises a gas blower accommodated in a conveying pipe for the biocoal suspension and a feed system for controlled introduction of the ground biocoal 3 into the conveying pipe. The gas may be air. In various embodiments, the gas blower is a compressor or a fan. In various embodiments the feed system is configured to feed the ground biocoal into the conveying pipe downstream of the gas blower.

In various embodiments the fluidization unit 4 is a fluidized bed having a pump configured to pump pressurized fluid into the particles of ground biocoal 3. In various embodiments the fluidization unit 4 comprises a vibrating unit providing a mechanical vibration to excite the particles of the ground biocoal 3.

Further embodiments for a fluidization unit 4 are disclosed in patent applications GB2259694A, EP0308026A2, CN214781678U and US4869622A.

In various embodiments the handling apparatus comprises a gasification unit 5 configured to receive the biocoal suspension and to generate synthesis gas, also called syngas.

When generating syngas directly from biomass, tar is also generated as a byproduct. Tar requires additional consideration in biomass gasification technology as tar may condense in processing equipment unless properly treated. Torrefaction pretreatment reduces the tar production during biomass gasification to a certain extent, which not only reduces the impact of tar on pipelines and equipment, but also improves the quality of gasification syngas. In some embodiments torrefaction is combined with catalytic reforming to further reduce tar production and improve the utilization of biomass energy.

Syngas is a mixture primarily of hydrogen and carbon monoxide, and often also contains carbon dioxide and methane. Syngas may be used to produce ammonia or methanol, and may be used as a fuel in combustion. As combustion fuel, syngas allows for power plants that start up and shut down more easily than coal powered power plants which directly fire the biocoal from torrefaction.

In various embodiments the handling apparatus comprises a control member 10 configured to control the torrefaction unit 1, the grinding unit 2, the fluidization unit 4, and/or the gasification unit 5. In various embodiments the control member 10 comprises a microprocessor 11 and a memory 12. The memory 12 stores instructions which, when executed by the microprocessor 11, cause the microprocessor 11 to control the torrefaction unit 1, the grinding unit 2, the fluidization unit 4, and/or the gasification unit 5.

In various embodiments the control member 10 is coupled with or comprises at least one bulk density unit configured to determine a normalized bulk density. In various embodiments the bulk density unit comprises at least one sensor to determine a mass and/or a volume of the received biomass, the produced biocoal 3, and/or the ground biocoal 3. In various embodiments the bulk density unit and/or the microprocessor 11 are configured to determine the normalized bulk density from the mass and/or the volume of the received biomass, the produced biocoal 3, and/or the ground biocoal 3. In various embodiments the bulk density unit and/or the microprocessor 11 are configured to calculate the normalized bulk density according to

$$normalized\ bulk\ density = \frac{tapped\ bulk\ density}{dry\ mass\ yield}$$

wherein the tapped bulk density is the density of the biocoal after grinding in metric tons per cubic meter, and the dry mass yield indicates a ratio of the biocoal mass before grinding to the initial mass of dried biomass from which dried biomass the biocoal is prepared.

In various embodiments the bulk density unit is configured to tap the ground biocoal 3 to thus obtain a random dense packing of the ground biocoal 3. In various embodiments the bulk density unit comprises a first member configured for determining the mass of the received biomass and the produced biocoal 3, the member preferably being arranged with the torrefaction unit 1. In various embodiments the bulk density unit comprises a second member configured for tapping the ground biocoal 3 and/or for determining a density of the ground biocoal 3. In various embodiments the second member is configured determining a tapped bulk density of the ground biocoal 3.

In various embodiments the bulk density unit is configured to frequently determine the normalized bulk density and the control member 10 is configured to frequently adjust the grinding of the biocoal 3 as a function of the determined normalized bulk density. Frequently determining the normalized bulk density particularly allows accounting for changes in the received biomass and/or changes in the grinding unit 2, such as wear and tear. In further embodiments the bulk density unit is configured to determine the normalized bulk density when operation of the handling apparatus for biocoal processing is started.

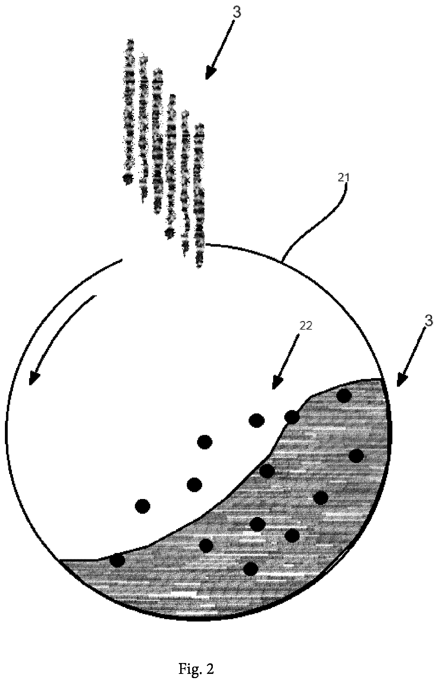

Fig. 2 shows embodiments of the grinding unit 2. In various embodiments, the grinding unit 2 comprises a cylinder 21 configured to rotate about its axis which axis extends horizontally or at an angle below 45° to a horizontal plane and a plurality of balls 22 made of a material harder than the biocoal 3 such as steel or ceramic. In these embodiments, the cylinder 21 is configured to receive the biocoal 3 and to rotate such that the balls get lifted under centrifugal force and friction, tumble and thereby grind the biocoal 3 to alter coal particle shape. In various embodiments the grinding mechanism with the balls 22 in the cylinder 21 allows being adapted to a wide range of coal types, and often is considered to be safe and reliable.

In various embodiments, the grinding unit 2 is an autogenous mill where the biocoal particles may be filled into a cylinder configured to rotate around its axis which axis extends horizontally or at an angle below 45° to a horizontal plane. The autogenous mill is configured to grind biocoal particles against each other to alter coal particle shape.

In various embodiments, the grinding unit 2 comprises a grinding rotator and a grinding base with the grinding rotator engaging the grinding base and the grinding rotator being configured to rotate with respect to the grinding base around a rotational axis. The grinding rotator and the grinding base comprise matching engagement surfaces which are rotation symmetric about the rotational axis, such that biocoal 3 entering the space between the engagement surfaces experiences a shear force. The shear force alters the coal particle shape of the biocoal 3.

In various embodiments, the grinding unit 2 comprises two cylindrical rollers with parallel axes. The cylindrical rollers are configured to rotate around their respective axes and one of the rollers is biased against the other. The biocoal 3 entering the space between the rollers is crushed and/or experiences a shear force, thus altering the coal particle shape of the biocoal 3.

In various embodiments, the grinding unit 2 comprises an annular groove configured to receive the biocoal 3 and at least one grinding wheel configured to roll in the annular groove and thus crush the biocoal accommodated in the annular groove. The biocoal moves through the annular groove towards the outer diameter due to centrifugal force.

In further embodiments additional or alternative grinding mechanisms configured to alter coal particle shape through attrition and/or compression forces are provided. In various embodiments at least two of the grinding mechanisms discussed above are applied. In various embodiments the grinding unit comprises a crusher applying compression forces to reduce a particle size of the biocoal 3, and a coal mill to attrite the particles of the biocoal 3. In various embodiments, the grinding unit 2 comprises a screening unit configured to determine a size of the particles of the biocoal 3 after the crusher and/or the coal mill. The screening unit is particularly configured to pass particles of the biocoal 3 which have a particle size below a particle threshold value, and to loop back particles of the biocoal 3 to the crusher and/or the coal mill which have a particle size above the particle threshold value. In various embodiments the particle threshold value is 13 mm. In various embodiments, the grinding unit 2 comprises a drying structure configured to remove moisture from the biocoal 3 while it is ground.

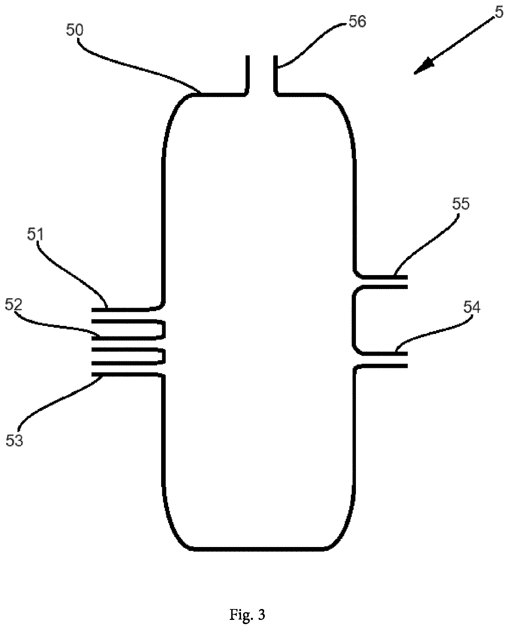

Fig. 3 shows embodiments of the gasification unit 5 comprising a gasification unit housing 50, a plurality of inlets 51, 52, 53, 54 and outlets. In various embodiments the gasification unit comprises an oxygen inlet 51, a biocoal inlet 52, a steam inlet 53 and/or a water inlet 54. In various embodiments the gasification unit 5 comprises a steam outlet 55 and/or a syngas outlet 56. The oxygen inlet 51 is configured to inject oxygen into the gasification unit housing 50. The biocoal inlet 52 is configured to inject the ground biocoal 3 into the gasification unit housing 50. The steam inlet 53 is configured to inject steam into the gasification unit housing 50. The water inlet 54 is configured to inject water into the gasification unit housing 50. In various embodiments at least two of the oxygen inlet 51, the biocoal inlet 52, the steam inlet 53 and the water inlet 54 are combined to form a single inlet. For example, in embodiments with the conveying fluid being water, water and the ground biocoal 3 are injected through a combined inlet..

In operation, the torrefaction unit 1 receives biomass and dries the biomass to remove its moisture content before processing the biomass to biocoal 3. In various embodiments the mass of a batch of the biomass is determined after drying and before processing the biomass to biocoal. After drying the biomass has no entrained water. Principally, dried biomass can still contain chemically bound water, that is water molecules that are incorporated into the molecular structure of the biomass material.

In various embodiments the mass of the biocoal processed from the batch of biomass is determined. In various embodiments at least 20% of the power contained in the biomass is released as synthesis gas and is oxidized to power the torrefaction process.

In various embodiments the biocoal 3 after torrefaction is cooled and stored.

In various embodiments the biocoal 3 passes to the grinding unit 2. The grinding unit 2 grinds the biocoal 3 and thus alters the biocoal particle shape through attrition and/or compression forces. The grinding unit 2 grinds the biocoal 3 until the normalized bulk density of the biocoal is above 0.75 metric tons per cubic meter. Grinding increases roundness and sphericity of the particles of the biocoal 3. The normalized bulk density is an indication of roundness and sphericity of the particles. The normalized bulk density increases with roundness and sphericity of the particles. The ground biocoal 3 passes to the fluidization unit 4. The fluidization unit 4 engages the ground biocoal 3 with a conveying fluid to thus create the biocoal suspension. In various embodiments the conveying fluid is a gas or a liquid. In various embodiments the conveying fluid is water.

In various embodiments the biocoal suspension passes to the gasification unit 5. The gasification unit 5 generates synthesis gas from the ground biocoal 3. In operation, ground biocoal 3 inside the gasification unit housing 50 heats up such that the ground biocoal 3 undergoes dry distillation and/or thermal cracking. The dry distillation and/or thermal cracking release volatile components. The volatile components comprise particularly tar, phenol, methanol, resin, and/or methane. The ground biocoal 3 converts to coal coke. Water heats up and converts to steam. In various embodiments the oxygen inlet 51 is configured to provide enough oxygen to combust essentially all condensable substances, such as tar, phenols, and/or higher hydrocarbons. In further embodiments the oxygen inlet 51 is configured to provide enough oxygen to combust essentially all condensable substances and at least some of the coal coke. The combustion of the coal coke generates gases such as $CO_2$ and CO and releases heat. The coal coke undergoes gasification reactions with oxygen, generating $H_2$, CO and $CO_2$.

By grinding the biocoal 3, the biocoal particles increase their sphericity. In this regard, sphericity relates to how closely the shape of an object resembles the shape of a sphere. By grinding the biocoal 3, the biocoal particles increase their roundness. Roundness in this regard is a degree of smoothing usually defined as a ratio of the average radius of curvature of the edges to the radius of curvature of the maximum inscribed sphere. It was realised that by increasing sphericity and/or roundness, packing density, hence bulk density, is increased. This allows to increase the amount of biocoal 3 in the biocoal suspension, and thus to reduce the amount of water provided into the gasification unit 5. During tests it was found that grinding allows to increase the amount of biocoal 3 in the water to above 50%. This allows to provide the gasification unit 5 with a biocoal suspension with a higher energy density and less water that needs to heat up.

The packing density is the fraction of the space filled by the particles making up the packing. The bulk density is the mass of the many particles of the material divided by the bulk volume, where bulk volume is the total volume occupied by the particles, including inter-particle void volume.

Increasing sphericity reduces viscosity of the biocoal suspension. Reduced viscosity allows feeding the biocoal suspension more efficiently into the gasification unit 5. Thus, while grinding consumes energy that does not immediately contribute to the energy content of the biocoal suspension, grinding helps reducing the water content of the biocoal suspension and thus can sometimes at least partially make good for the energy consumption of the grinding.

It was now realised that a normalised bulk density of the ground biocoal 3 reflects packing density as a result of the particle shape after grinding. The normalized bulk density thus provides a parameter for determining whether sphericity and/or roundness are sufficient to achieve a biocoal suspension with a ratio of biocoal to water of more than 50%.

**Claims**

1. A processing method for processing biomass, the method comprising:

   - preparing biocoal from biomass; and
   - grinding the biocoal;

   wherein a normalized bulk density of the biocoal after grinding is above 0.75 metric tons per cubic meter, the normalized bulk density being calculated according to

$$normalized\ bulk\ density = \frac{tapped\ bulk\ density}{dry\ mass\ yield}$$

   wherein the tapped bulk density is the density of the biocoal after grinding in metric tons per cubic meter, and the dry mass yield indicates a ratio of the biocoal mass before grinding to the initial mass of dried biomass from which dried biomass the biocoal is prepared.

2. The method of claim 1, further comprising mixing the ground biocoal with a conveying fluid, and forwarding the ground biocoal and the conveying fluid to a gasification unit.

3. The method of claim 2, wherein the conveying fluid is water.

4. The method of claim 2, wherein the conveying fluid is an inert gas.

5. The method of claim 4, wherein the density of the mixture of solids and inert gas at a pressure between 2 and 10 MPa, preferably 5 MPa, is at minimum 380 kg/m3.

6. The method of claim 3, wherein the biocoal is ground and mixed with water such that the ground biocoal and the water have a mass ratio of biocoal to water above 50%.

7. The method of any preceding claim, further comprising generating a synthesis gas from the ground biocoal.

8. The method of any preceding claim, wherein the biocoal has a molar ratio of oxygen to carbon below 0.4 and/or a moisture content of 2% or less by weight.

9. The method of any preceding claim, wherein preparing biocoal from biomass comprises torrefying the biomass.

10. The method of any preceding claim, further comprising determining the normalized bulk density including tapping a predetermined mass of biocoal, determining a volume of the predetermined mass of biocoal, and determining ratio of the biocoal mass to the ratio of the biocoal mass to the initial mass of biomass.

11. A device for processing biocoal, the device comprising:

   - a pyrolysis device configured to process biomass to create biocoal; and
   - a coal mill configured to grind the biocoal;

   wherein the coal mill is configured to grind the biocoal such that a normalized bulk density of the biocoal after grinding is above 0.75 metric tons per cubic meter, the normalized bulk density being calculated according to

$$normalized\ bulk\ density = \frac{tapped\ bulk\ density}{dry\ mass\ yield}$$

   wherein the tapped bulk density is the density of the biocoal after grinding in metric tons per cubic meter, and the dry mass yield indicates a ratio of the biocoal mass before grinding to the initial mass of dried biomass from which dried biomass the biocoal is prepared.

12. The device of claim 9, wherein the pyrolysis device is a torrefaction device.

13. The device of claim 9 or 10, further comprising a gasification unit configured to receive the ground biocoal and generate a synthesis gas from the ground biocoal.

14. The device of any of claims 9 to 11, further comprising a mixing device configured to mix the ground biocoal with water, wherein the coal mill is configured to grind the biocoal such that the biocoal and the water exiting the mixing device have a mass ratio of biocoal to water above 50%.

15. A control member including a microprocessor and a memory, the memory comprising instructions which, when executed by the microprocessor, cause the microprocessor to execute the method according to any one of the claims 1 to 8.

Fig.1

Fig. 2

Fig. 3

**EUROPEAN SEARCH REPORT**

Europäisches Patentamt
European Patent Office
Office européen des brevets

Application Number

EP 24 18 0920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANISOM ABDULLAH AND HONGWEI WU: "Biochar as a Fuel: 1. Properties and Grindability of Biochars Produced from the Pyrolysis of Mallee Wood under Slow-Heating Conditions", ENERGY & FUELS, AMERICAN CHEMICAL SOCIETY, WASHINGTON, DC, US, vol. 23, no. 8, 1 January 2009 (2009-01-01), pages 4174-4181, XP008153751, ISSN: 0887-0624, DOI: 10.1021/EF900494T [retrieved on 2009-07-24] | 1,8-12, 15 | INV. C10B53/02 C10L5/44 C10L9/08 ADD. C10L5/36 |
| Y | * page 4176, paragraphs 2.2,2.3; figure 1 * * page 4179, right-hand column, paragraph 2 - page 4180, left-hand column, paragraph 1; figure 6 * * page 4178; figure 4b * | 2-7,13, 14 | |
| Y | Boersma Arjen ET AL: "Torrefaction for Entrained Flow Gasification of Biomass", , 31 May 2014 (2014-05-31), XP093221175, Retrieved from the Internet: URL:https://www.researchgate.net/publicati on/237749396_Torrefaction_for_Entrained_Fl ow_Gasification_of_Biomass/link/0deec52932 ab42dbdb000000/download?_tp=eyJjb250ZXh0Ij p7ImZpcnN0UGFnZSI6InB1YmxpY2F0aW9uIiwicGFn ZSI6InB1YmxpY2F0aW9uIn19 * abstract * * page 33, paragraph 4.1 * * pages 45,46, paragraph 5 * | 2-7,13, 14 | TECHNICAL FIELDS SEARCHED (IPC) C10B C10L |

The present search report has been drawn up for all claims

| Place of search | Date of completion of the search | Examiner |
|---|---|---|
| The Hague | 5 November 2024 | Bertin, Séverine |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021018794 A1
- GB 2259694 A
- EP 0308026 A2
- CN 214781678 U
- US 4869622 A